(19) Europäisches Patentamt
European Patent Office
Office européen des brevets

(11) **EP 4 470 710 A1**

(12) **EUROPEAN PATENT APPLICATION**
published in accordance with Art. 153(4) EPC

(43) Date of publication:
04.12.2024 Bulletin 2024/49

(51) International Patent Classification (IPC):
**B23K 26/08** (2014.01)     **B23K 26/03** (2006.01)
**B23K 26/10** (2006.01)     **B23K 26/342** (2014.01)

(21) Application number: 23760172.9

(22) Date of filing: 27.02.2023

(52) Cooperative Patent Classification (CPC):
**B23K 26/03; B23K 26/08; B23K 26/10;**
**B23K 26/342;** Y02P 10/25

(86) International application number:
**PCT/JP2023/007068**

(87) International publication number:
**WO 2023/163174 (31.08.2023 Gazette 2023/35)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **28.02.2022 JP 2022029669**

(71) Applicant: **DMG Mori Co., Ltd.**
**Yamatokoriyama-shi, Nara 639-1160 (JP)**

(72) Inventor: **HIRONO, Yoko**
**Yamatokoriyama-shi, Nara 639-1160 (JP)**

(74) Representative: **Isarpatent**
**Patent- und Rechtsanwälte**
**Barth Hassa Peckmann & Partner mbB**
**Friedrichstraße 31**
**80801 München (DE)**

(54) **WORKPIECE MACHINING METHOD AND MACHINING MACHINE**

(57) A method for processing a workpiece includes holding a workpiece (W) by a first holding portion (51) and a second holding portion (52) that are disposed to be separated from each other, performing additive manufacturing on the workpiece (W) by supplying material powder (P) and emitting a laser beam (L) to the workpiece (W) held by the first holding portion (51) and the second holding portion (52), and relatively moving the first holding portion (51) and the second holding portion (52) in a direction away from each other during at least a portion of performing the additive manufacturing on the workpiece (W).

FIG.4

EP 4 470 710 A1

## Description

TECHNICAL FIELD

The present invention relates to a method for processing a workpiece, and a processing machine.

BACKGROUND ART

For example, Japanese Patent No. 6810823 (PTL 1) discloses an additive manufacturing method for a workpiece, the additive manufacturing method including: applying a stress to the workpiece having a first linear expansion coefficient; supplying material powder having a second linear expansion coefficient different from the first linear expansion coefficient, and emitting a laser beam, to the workpiece, while applying the stress to the workpiece; and cooling the workpiece while relieving the stress on the workpiece, after supplying the material powder and emitting the laser beam.

CITATION LIST

PATENT LITERATURE

PTL 1: Japanese Patent No. 6810823

SUMMARY OF INVENTION

TECHNICAL PROBLEM

As disclosed in PTL 1 described above, there has been known a method for processing a workpiece, to produce a three-dimensional shape on the workpiece, using a directed energy deposition method that emits a laser beam to the workpiece while supplying material powder to the workpiece.

In such a method for processing a workpiece, in order to support the workpiece to be processed, the workpiece is held by a first holding portion and a second holding portion that are disposed to be separated from each other. In this case, when the laser beam is emitted to the workpiece, the workpiece thermally expands, and thereby the surface of the workpiece is distorted between the first holding portion and the second holding portion. This may cause a problem that the material powder cannot be supplied onto the surface of the workpiece as intended, and the accuracy of processing the workpiece decreases.

Accordingly, an object of the present invention is to solve the aforementioned problem, and to provide a method for processing a workpiece and a processing machine that can maintain the accuracy of processing the workpiece to be high in additive manufacturing for the workpiece using the directed energy deposition method.

SOLUTION TO PROBLEM

A method for processing a workpiece according to the present invention includes holding the workpiece by a first holding portion and a second holding portion that are disposed to be separated from each other, performing additive manufacturing on the workpiece by supplying material powder and emitting a laser beam to the workpiece held by the first holding portion and the second holding portion, and relatively moving the first holding portion and the second holding portion in a direction away from each other during at least a portion of performing the additive manufacturing on the workpiece.

According to the method for processing the workpiece configured as described above, when the laser beam is emitted to the workpiece during the additive manufacturing, the workpiece thermally expands between the first holding portion and the second holding portion. In this case, distortion of the surface of the workpiece between the first holding portion and the second holding portion can be suppressed by relatively moving the first holding portion and the second holding portion in the direction away from each other during the at least a portion of performing the additive manufacturing on the workpiece. Thereby, the material powder can be supplied onto the surface of the workpiece as intended, and thus the accuracy of processing the workpiece can be maintained to be high.

In addition, preferably, the first holding portion is a first workpiece spindle for rotating the workpiece about a predetermined axis. The second holding portion is a second workpiece spindle for rotating the workpiece about the predetermined axis, the second workpiece spindle being disposed to face the first workpiece spindle in an axial direction of the predetermined axis, and being slidable in the axial direction of the predetermined axis. Relatively moving the first holding portion and the second holding portion includes sliding the second workpiece spindle in the axial direction of the predetermined axis.

According to the method for processing the workpiece configured as described above, distortion of the surface of the workpiece due to thermal expansion of the workpiece during the additive manufacturing can be suppressed with a simple configuration.

In addition, preferably, the method for processing the workpiece further includes detecting a temperature of the workpiece during at least a portion of performing the additive manufacturing on the workpiece, and calculating a thermal expansion amount of the workpiece based on the detected temperature of the workpiece. Relatively moving the first holding portion and the second holding portion includes relatively moving the first holding portion and the second holding portion in the direction away from each other, by a distance corresponding to the calculated thermal expansion amount of the workpiece.

According to the method for processing the workpiece configured as described above, the thermal expansion amount of the workpiece during the additive manufacturing can be understood accurately, and thus distortion of the surface of the workpiece can be suppressed more reliably.

In addition, preferably, the method for processing the workpiece further includes cooling the workpiece while relatively moving the first holding portion and the second holding portion in a direction closer to each other, after performing the additive manufacturing on the workpiece.

According to the method for processing the workpiece configured as described above, occurrence of residual stress in the workpiece can be suppressed by relatively moving the first holding portion and the second holding portion in the direction closer to each other, according to thermal contraction of the workpiece during cooling.

A processing machine according to the present invention is a processing machine that performs additive manufacturing for a workpiece. The processing machine includes: an additive manufacturing head that supplies material powder and emits a laser beam to the workpiece; a first workpiece spindle for rotating the workpiece about a predetermined axis; a second workpiece spindle for rotating the workpiece about the predetermined axis, the second workpiece spindle being disposed to face the first workpiece spindle in an axial direction of the predetermined axis, and being slidable in the axial direction of the predetermined axis; and a control device that controls the processing machine. The control device controls operation of the additive manufacturing head to perform the additive manufacturing on the workpiece by supplying the material powder and emitting the laser beam to the workpiece held by the first workpiece spindle and the second workpiece spindle, and controls sliding operation of the second workpiece spindle such that the second workpiece spindle moves in a direction away from the first workpiece spindle during at least a portion during the additive manufacturing for the workpiece.

According to the processing machine configured as described above, the material powder can be supplied onto the surface of the workpiece as intended, and thus the accuracy of processing the workpiece can be maintained to be high.

ADVANTAGEOUS EFFECTS OF INVENTION

As described above, according to the present invention, it is possible to provide a method for processing a workpiece and a processing machine that can maintain the accuracy of processing the workpiece to be high in additive manufacturing for the workpiece using the directed energy deposition method.

BRIEF DESCRIPTION OF DRAWINGS

Fig. 1 is a front view showing a processing machine.

Fig. 2 is a perspective view showing a state within a processing area during additive manufacturing, in the processing machine in Fig. 1.

Fig. 3 is a front view showing a first step of performing a method for processing a workpiece in the present embodiment.

Fig. 4 is a front view showing a second step of performing the method for processing the workpiece in the present embodiment.

Fig. 5 is a front view showing a third step of performing the method for processing the workpiece in the present embodiment.

Fig. 6 is a front view showing a fourth step of performing the method for processing the workpiece in the present embodiment.

Fig. 7 is a block diagram showing a control system related to the additive manufacturing for the workpiece, in the processing machine in Figs. 1 and 2.

Fig. 8 is a flowchart diagram showing a flow of steps of performing the method for processing the workpiece in the present embodiment, using the processing machine in Figs. 1 and 2.

Fig. 9 is a block diagram showing a variation of the control system related to the additive manufacturing for the workpiece in Fig. 7.

Fig. 10 is a flowchart diagram showing a variation of the flow of the steps of performing the method for processing the workpiece in Fig. 8.

Fig. 11 is a perspective view showing an example of the workpiece to be subjected to the additive manufacturing.

DESCRIPTION OF EMBODIMENTS

An embodiment of the present invention will be described with reference to the drawings. It should be noted that, in the drawings referred to below, identical or corresponding members will be designated by the same numerals.

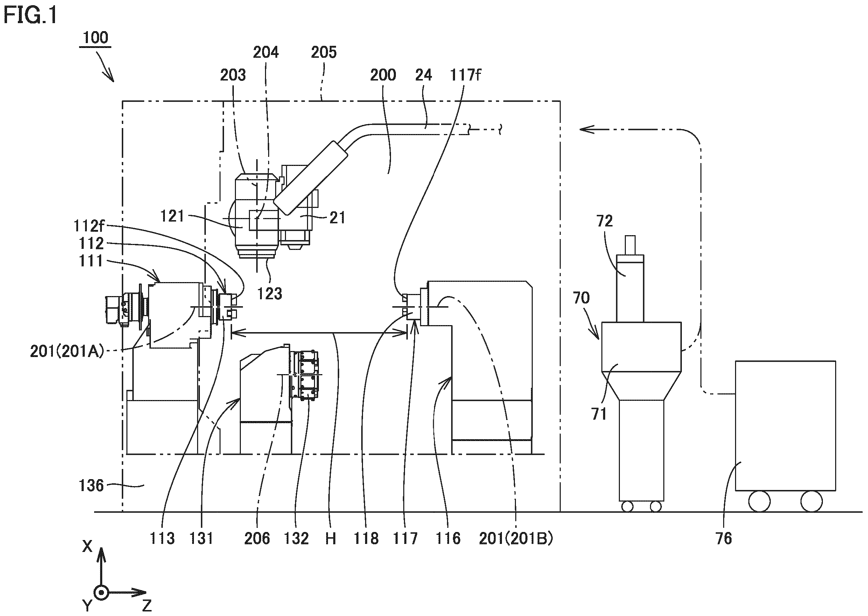

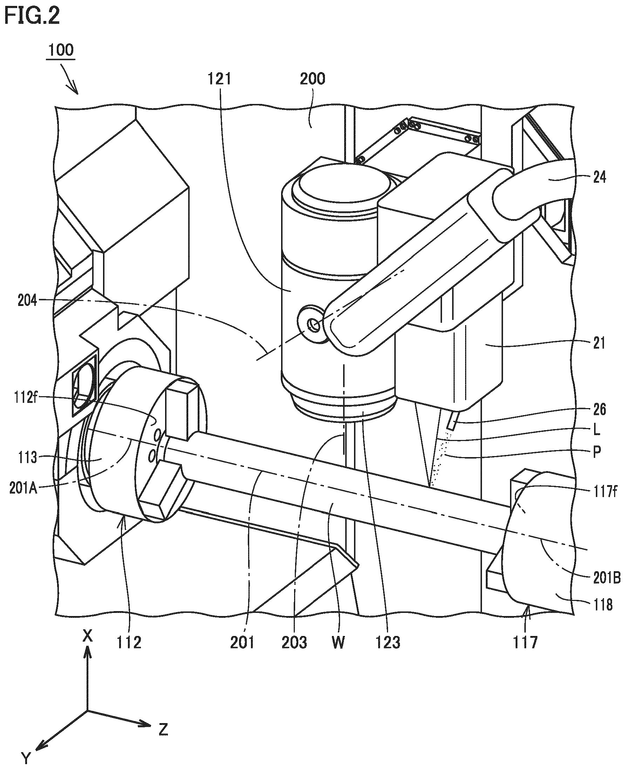

Fig. 1 is a front view showing a processing machine. Fig. 1 shows an inside of the processing machine when seen through a cover body serving as an exterior of the processing machine. Fig. 2 is a perspective view showing a state within a processing area during additive manufacturing, in the processing machine in Fig. 1.

Referring to Figs. 1 and 2, a processing machine 100 is an AM/SM hybrid processing machine capable of performing additive manufacturing (AM) processing for a workpiece and subtractive manufacturing (SM) processing for a workpiece. Processing machine 100 has a turning function using a fixed tool and a milling function using a rotary tool, as functions of the SM processing. Processing machine 100 is a numerically controlled (NC) processing machine in which various operations for workpiece processing are automated by numerical control using a computer.

Herein, an axis parallel to a left-right direction (width direction) of processing machine 100 and extending in a horizontal direction is referred to as a "Z axis", an axis parallel to a front-rear direction (depth direction) of processing machine 100 and extending in the horizontal direction is referred to as a "Y axis", and an axis extending in a vertical direction is referred to as an "X axis". In Fig. 1, a rightward direction is referred to as a "+Z-axis direction", and a leftward direction is referred to as a "-Z-axis direction". In Fig. 1, a frontward direction with respect to the sheet plane is referred to as a "+Y-axis direction", and a rearward direction is referred to as a "-Y-axis direction". In Fig. 1, an upward direction is referred to as a "+X-axis direction", and a downward direction is referred to as a "-X-axis direction".

First, a basic structure of processing machine 100 used for a method for processing a workpiece in the present embodiment will be described. Processing machine 100 has a bed 136, a first headstock 111, a second headstock 116, a tool spindle 121, and a lower tool rest 131.

Bed 136 is a base member for supporting first headstock 111, second headstock 116, tool spindle 121, lower tool rest 131, and the like, and is installed on a floor surface of a factory or the like. First headstock 111 (a first workpiece spindle 112 described later), second headstock 116, tool spindle 121, and lower tool rest 131 are provided within a processing area 200 defined by a splash guard 205.

Processing area 200 is a space in which subtractive manufacturing and additive manufacturing for a workpiece are performed, and is enclosed to prevent foreign matters such as chips, cutting oil, fumes, and the like generated by such workpiece processing from escaping to the outside of processing area 200.

First headstock 111 and second headstock 116 are provided to face each other in a Z-axis direction. First headstock 111 and second headstock 116 respectively have first workpiece spindle 112 and a second workpiece spindle 117 for rotating a workpiece during turning processing using a fixed tool, or holding a workpiece during milling processing or subtractive manufacturing using a rotary tool. First workpiece spindle 112 is provided to be rotatable about a central axis 201A parallel to the Z axis, and second workpiece spindle 117 is provided to be rotatable about a central axis 201B parallel to the Z axis. Central axis 201A and central axis 201B extend on the same straight line, and constitute a central axis 201.

First workpiece spindle 112 and second workpiece spindle 117 respectively have a chuck 113 and a chuck 118 that removably grip the workpiece. In the present embodiment, an end surface of a block that supports a claw for gripping the workpiece in chuck 113 is referred to as a spindle end surface 112f of first workpiece spindle 112, and an end surface of a block that supports a claw for gripping the workpiece in chuck 118 is referred to as a spindle end surface 117f of second workpiece spindle 117. In this case, a distance in the Z-axis direction between spindle end surface 112f of first workpiece spindle 112 and spindle end surface 117f of second workpiece spindle 117 corresponds to a spindle-to-spindle distance H between first workpiece spindle 112 and second workpiece spindle 117.

As shown in Fig. 2, a workpiece W to be processed is held by first workpiece spindle 112 and second workpiece spindle 117. Workpiece W is made of a metal material such as stainless steel, for example.

Workpiece W extends on an axis of central axis 201. One end of workpiece W in an axial direction of central axis 201 is gripped by chuck 113, and the other end of workpiece W in the axial direction of central axis 201 is gripped by chuck 118. Workpiece W is rotatable about central axis 201 by rotatably driving first workpiece spindle 112 and second workpiece spindle 117 in synchronization with each other.

Second headstock 116 (second workpiece spindle 117) is slidable in the Z-axis direction, by a variety of a feed mechanism, a guide mechanism, a servo motor, and the like. As second workpiece spindle 117 moves in a direction away from first workpiece spindle 112 (the +Z-axis direction), spindle-to-spindle distance H between first workpiece spindle 112 and second workpiece spindle 117 increases, and as second workpiece spindle 117 moves in a direction closer to first workpiece spindle 112 (the -Z-axis direction), spindle-to-spindle distance H between first workpiece spindle 112 and second workpiece spindle 117 decreases.

Tool spindle (an upper tool rest) 121 rotates the rotary tool during the milling processing using the rotary tool. Tool spindle 121 is provided to be rotatable about a central axis 203 parallel to an X axis-Z axis plane. Tool spindle 121 is provided with a clamp mechanism for detachably holding the rotary tool.

Tool spindle 121 is supported above bed 136 by a column (not shown) or the like. Tool spindle 121 is slidable in an X-axis direction, a Y-axis direction, and the Z-axis direction, by a variety of a feed mechanism, a guide mechanism, a servo motor, and the like provided to the column or the like. With such a configuration, a processing position by the rotary tool attached to tool spindle 121 moves three-dimensionally.

Further, tool spindle 121 is provided to be swivelable about a swiveling central axis 204 parallel to the Y axis (B-axis swiveling). A swiveling range of tool spindle 121 is a range of $\pm 120°$ relative to a posture in which a spindle end surface 123 of tool spindle 121 faces downward (posture shown in Figs. 1 and 2). The swiveling range of tool spindle 121 is preferably a range of more than or equal to $\pm 90°$ relative to the posture shown in Figs. 1 and 2.

Although not shown in Fig. 1, an automatic tool changer (ATC) for automatically changing a tool attached to tool spindle 121, and a tool magazine for accommodating replacement tools attachable to tool spindle 121 are provided near first headstock 111.

A plurality of fixed tools for the turning processing are attached to lower tool rest 131. Lower tool rest 131 is of a so-called turret type, to which the plurality of fixed tools are radially attached and perform swivel indexing.

More specifically, lower tool rest 131 has a swiveling portion 132. Swiveling portion 132 is provided to be swivelable about a central axis 206 parallel to the Z axis. A plurality of tool holders for holding the fixed tools are attached at positions spaced apart from each other in a circumferential direction around central axis 206. When swiveling portion 132 swivels about central axis 206, the fixed tools held by the tool holders move in the circumferential direction, and a fixed tool used for the turning processing is indexed.

Lower tool rest 131 is supported on bed 136 by a saddle (not shown) or the like. Lower tool rest 131 is slidable in the X-axis direction and the Z-axis direction, by a variety of a feed mechanism, a guide mechanism, a servo motor, and the like provided to the saddle or the like.

Processing machine 100 further has an additive manufacturing head 21. Additive manufacturing head 21 performs additive manufacturing by supplying material powder P and emitting a laser beam L to workpiece W (directed energy deposition). As material powder P, for example, powder of a metal such as a cobalt-based alloy or an SKD material can be used. Material powder P may be the same material as that for workpiece W, or may be a material different from that for workpiece W.

As shown in Fig. 2, additive manufacturing head 21 has a nozzle 26. Nozzle 26 is made of a tube member through which material powder P can pass. Nozzle 26 discharges material powder P toward workpiece W.

Additive manufacturing head 21 is configured to be detachably attached to tool spindle 121. During the additive manufacturing, additive manufacturing head 21 is attached to tool spindle 121. As tool spindle 121 slides in the X-axis direction, the Y-axis direction, and the Z-axis direction, a processing position of the additive manufacturing by additive manufacturing head 21 moves three-dimensionally. Further, as tool spindle 121 swivels about swiveling central axis 204, additive manufacturing head 21 also swivels about swiveling central axis 204 together with tool spindle 121. Thereby, a direction of the additive manufacturing by additive manufacturing head 21 (a direction in which laser beam L is emitted to workpiece W) can be freely changed.

During the subtractive manufacturing, additive manufacturing head 21 is separated from tool spindle 121 and is stored in a head stocker (not shown).

Tool spindle 121 is provided with the clamp mechanism, and when additive manufacturing head 21 is attached to tool spindle 121, the clamp mechanism operates to couple additive manufacturing head 21 to tool spindle 121. Examples of the clamp mechanism include a mechanism that obtains a clamped state using a spring force and obtains an unclamped state using a hydraulic pressure.

As shown in Fig. 1, processing machine 100 further has a powder feeder 70, a laser oscillation device 76, and a cable 24.

Powder feeder 70 feeds the material powder to be used for the additive manufacturing toward additive manufacturing head 21 within processing area 200. Powder feeder 70 has a powder hopper 72 and a mixer 71. Powder hopper 72 forms an enclosed space for accommodating the material powder to be used for the additive manufacturing. Mixer 71 mixes the material powder accommodated in powder hopper 72 with a carrier gas for the material powder.

Laser oscillation device 76 oscillates the laser beam to be used for the additive manufacturing. Cable 24 includes an optical fiber for guiding the laser beam from laser oscillation device 76 toward additive manufacturing head 21, a pipe for guiding the material powder from powder feeder 70 toward additive manufacturing head 21, an air pipe serving as an air flow path, a gas pipe serving as an inert gas flow path, a cooling pipe serving as a refrigerant flow path, electric wiring, and a tube member accommodating these.

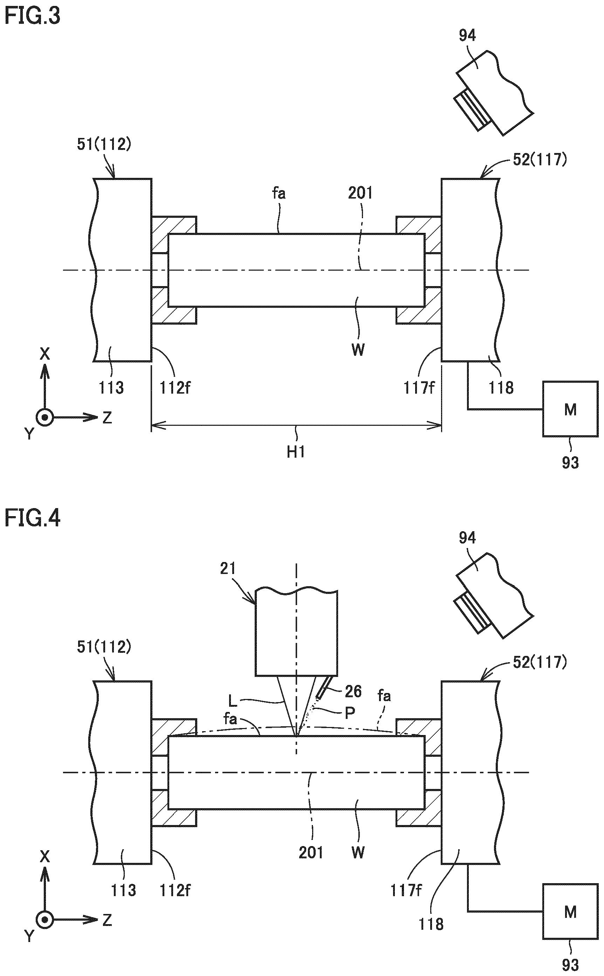

Next, the method for processing the workpiece in the present embodiment will be described. Figs. 3 to 6 are front views showing steps of performing the method for processing the workpiece in the present embodiment.

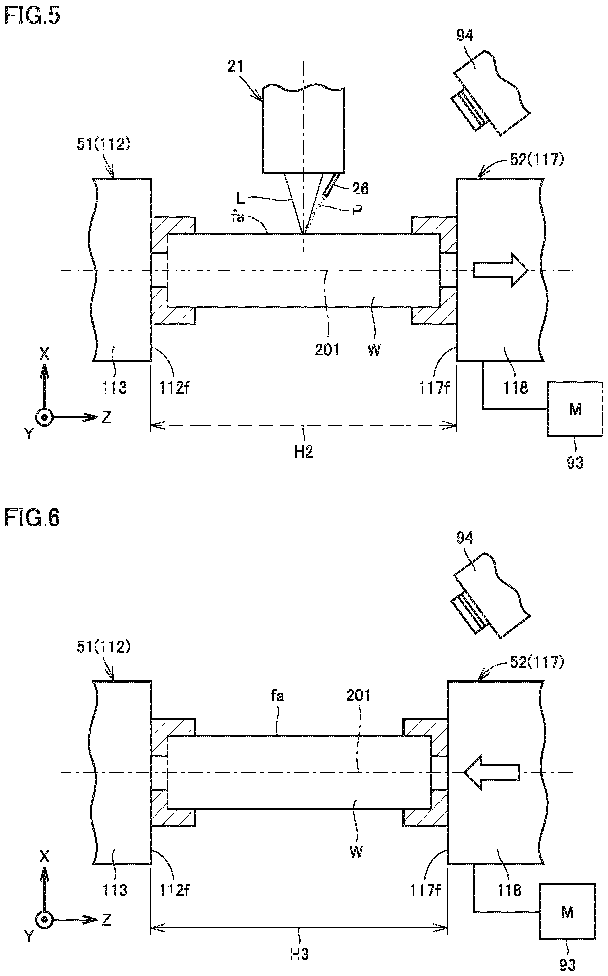

Referring to Figs. 3 to 6, the method for processing the workpiece in the present embodiment has the step of holding workpiece W by a first holding portion 51 (first workpiece spindle 112) and a second holding portion 52 (second workpiece spindle 117) as shown in Fig. 3, the step of performing additive manufacturing on workpiece W by supplying material powder P and emitting laser beam L to workpiece W held by first holding portion 51 and second holding portion 52 as shown in Fig. 4, and the step of relatively moving first holding portion 51 and second holding portion 52 in a direction away from each other during at least a portion of the step of performing the additive manufacturing on workpiece W as shown in Fig. 5.

When laser beam L is emitted to workpiece W during the additive manufacturing for workpiece W, workpiece W thermally expands. Since workpiece W is held by first holding portion 51 and second holding portion 52, as workpiece W thermally expands, a surface fa of workpiece W on a side to which laser beam L is emitted is distorted to protrude outward in a radial direction of central axis 201. In this case, there is a possibility that material powder P cannot be stacked at an intended position on surface fa of workpiece W, and the accuracy of the additive manufacturing for workpiece W may decrease.

In contrast, in the method for processing the workpiece in the present embodiment, distortion of surface fa of workpiece W due to thermal expansion of workpiece W can be suppressed by relatively moving first holding portion 51 and second holding portion 52 in the direction away from each other during the at least a portion of the step of performing the additive manufacturing on workpiece W. Thereby, material powder P can be stacked at an intended position on surface fa of workpiece W, and thus highly accurate additive manufacturing can be performed on workpiece W.

It should be noted that relative movement of first holding portion 51 and second holding portion 52 may be performed in a portion of a period for which the additive manufacturing is performed on workpiece W. Relative movement of first holding portion 51 and second holding portion 52 may be performed continuously, or may be performed intermittently, during the additive manufacturing for workpiece W.

As shown in Fig. 4, the method for processing the workpiece in the present embodiment further has the step of detecting a temperature of workpiece W during at least a portion of the step of performing the additive manufacturing on workpiece W, and the step of calculating a thermal expansion amount of workpiece W based on the detected temperature of workpiece W. As shown in Fig. 5, at the step of relatively moving first holding portion 51 and second holding portion 52, first holding portion 51 and second holding portion 52 are relatively moved in the direction away from each other, by a distance corresponding to the calculated thermal expansion amount of workpiece W.

According to such a configuration, the thermal expansion amount of workpiece W during the additive manufacturing can be understood accurately based on the temperature of workpiece W. Thereby, distortion of surface fa of workpiece W due to thermal expansion of workpiece W can be suppressed more reliably.

As shown in Fig. 6, the method for processing the workpiece further has the step of cooling workpiece W while relatively moving first workpiece spindle 112 and second workpiece spindle 117 in a direction closer to each other, after the step of performing the additive manufacturing on workpiece W.

After the additive manufacturing for workpiece W ends, workpiece W is cooled to a certain temperature, and then is removed from first holding portion 51 and second holding portion 52. In this case, when workpiece W thermally contracts as it is cooled, residual stress may occur in workpiece W, because workpiece W is held by first holding portion 51 and second holding portion 52.

In response thereto, in the method for processing the workpiece in the present embodiment, first holding portion 51 and second holding portion 52 are relatively moved in the direction closer to each other, according to thermal contraction of workpiece W during cooling. Thereby, occurrence of residual stress in workpiece W can be suppressed.

Next, a description will be given of a case where the method for processing the workpiece in the present embodiment is performed using processing machine 100 in Figs. 1 and 2, as a more specific example of the method for processing the workpiece in the present embodiment.

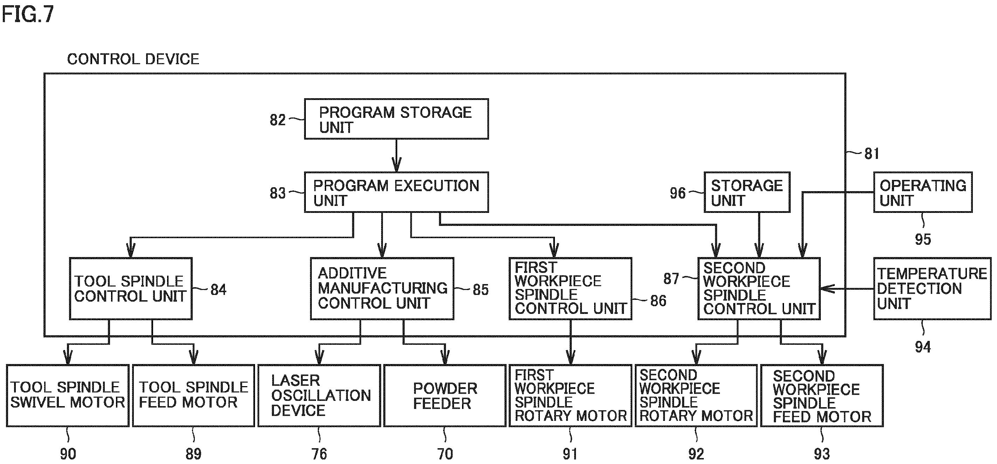

Fig. 7 is a block diagram showing a control system related to the additive manufacturing for the workpiece, in the processing machine in Figs. 1 and 2. Referring to Fig. 7, processing machine 100 further has a control device 81.

Control device 81 controls processing machine 100. Control device 81 is a control panel provided to processing machine 100 for controlling various operations in processing machine 100.

Control device 81 has a program storage unit 82, a program execution unit 83, a tool spindle control unit 84, an additive manufacturing control unit 85, a first workpiece spindle control unit 86, and a second workpiece spindle control unit 87.

Program storage unit 82 stores an execution program (numerical control program) for workpiece processing created by an operator of processing machine 100. As an example, program storage unit 82 is a flash memory.

Program execution unit 83 executes the execution program stored in program storage unit 82. Program execution unit 83 reads instructions of the execution program, and outputs a control signal to each of tool spindle control unit 84, additive manufacturing control unit 85, first workpiece spindle control unit 86, and second workpiece spindle control unit 87.

Tool spindle control unit 84 controls a tool spindle feed motor 89 for sliding tool spindle 121 in the X-axis direction, the Y-axis direction, and the Z-axis direction, and a tool spindle swivel motor 90 for causing tool spindle 121 to perform B-axis swiveling, according to the control signal from program execution unit 83. Additive manufacturing control unit 85 controls laser oscillation device 76 for supplying the laser beam to additive manufacturing head 21, and powder feeder 70 for supplying the material powder to additive manufacturing head 21, according to the control signal from program execution unit 83.

First workpiece spindle control unit 86 controls a first workpiece spindle rotary motor 91 for rotating first workpiece spindle 112, according to the control signal from program execution unit 83. Second workpiece spindle control unit 87 controls a second workpiece spindle rotary motor 92 for rotating second workpiece spindle 117, and a second workpiece spindle feed motor 93 for sliding second workpiece spindle 117 in the Z-axis direction, according to the control signal from program execution unit 83.

Control device 81 further has a storage unit 96. Storage unit 96 stores data on the relation between the type of metal used for the workpiece and the linear expansion coefficient of the metal.

Processing machine 100 further has an operating unit 95 and a temperature detection unit 94. Operating unit 95 is provided outside processing area 200. Operating unit 95 includes various buttons and switches used when the operator operates processing machine 100, a display unit showing, for example, a processing state of the workpiece in processing machine 100, and the like. Operating unit 95 is configured such that the type of metal used for the workpiece and the total length of the workpiece in the Z-axis direction can be inputted thereto.

Temperature detection unit 94 is provided within processing area 200. Temperature detection unit 94 is configured to detect the temperature of the workpiece during the additive manufacturing. Temperature detection unit 94 detects the temperature of the workpiece by a non-contact method. Temperature detection unit 94 is, for example, an infrared temperature sensor that senses infrared radiation energy released from the surface of the workpiece, and converts the energy into a temperature and outputs the temperature. Temperature detection unit 94 outputs the detected temperature of the workpiece to second workpiece spindle control unit 87.

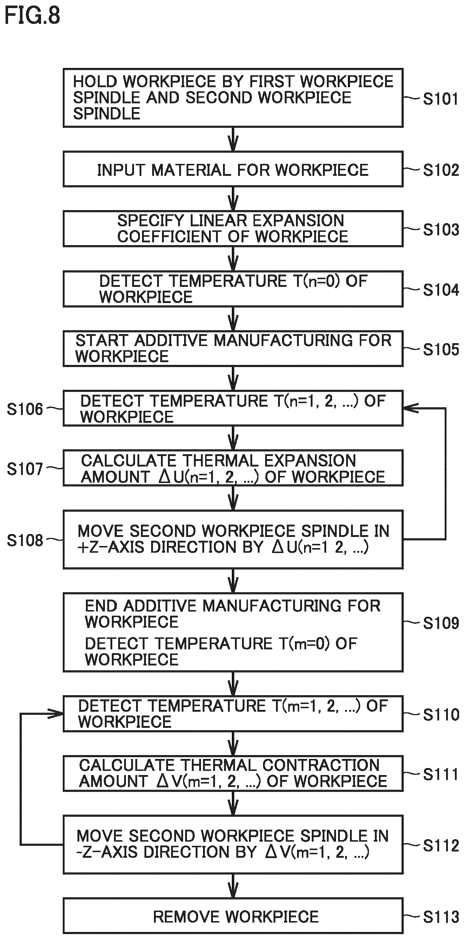

Fig. 8 is a flowchart diagram showing a flow of steps of performing the method for processing the workpiece in the present embodiment, using the processing machine in Figs. 1 and 2.

Referring to Figs. 3, 7, and 8, first, workpiece W is held by first workpiece spindle 112 and second workpiece spindle 117 (S101). In this step, workpiece W is disposed between first workpiece spindle 112 and second workpiece spindle 117. One end and the other end of workpiece W in the Z-axis direction are gripped by chuck 113 and chuck 118, respectively.

The type of metal used for workpiece W and a total length S of workpiece W in the Z-axis direction are inputted to operating unit 95 (S102). Operating unit 95 outputs the inputted type of metal and total length S to second workpiece spindle control unit 87.

Then, second workpiece spindle control unit 87 specifies a linear expansion coefficient $\alpha$ of workpiece W (S103). In this step, second workpiece spindle control unit 87 checks the type of metal used for workpiece W obtained in the step of S102, against the data stored in storage unit 96, to specify linear expansion coefficient $\alpha$ of workpiece W.

Temperature detection unit 94 detects a temperature T(n=0) of workpiece W (S104). Temperature detection unit 94 outputs detected temperature T(n=0) of workpiece W to second workpiece spindle control unit 87.

Referring to Figs. 4, 7, and 8, then, tool spindle control unit 84, additive manufacturing control unit 85, and the like start the additive manufacturing for workpiece W (S105). In this step, the additive manufacturing for workpiece W is performed according to the execution program stored in program storage unit 82.

More specifically, tool spindle control unit 84 controls tool spindle feed motor 89 and tool spindle swivel motor 90 such that additive manufacturing head 21 attached to tool spindle 121 is disposed directly above workpiece W, and spindle end surface 123 of tool spindle 121 is oriented in the -X-axis direction. First workpiece spindle control unit 86 and second workpiece spindle control unit 87 control first workpiece spindle rotary motor 91 and second workpiece spindle rotary motor 92, respectively, such that surface fa of workpiece W is oriented in the +X-axis direction. Additive manufacturing control unit 85 controls laser oscillation device 76 and powder feeder 70 such that laser beam L and material powder P are supplied from additive manufacturing head 21 toward surface fa of workpiece W. Tool spindle control unit 84 controls tool spindle feed motor 89 such that additive manufacturing head 21 moves according to the execution program stored in program storage unit 82.

Then, after a lapse of a predetermined time from the start of the additive manufacturing in the step of S105, temperature detection unit 94 detects a temperature T(n=1) of workpiece W (S106). Temperature detection unit 94 outputs detected temperature T(n=1) of workpiece W to second workpiece spindle control unit 87.

Then, second workpiece spindle control unit 87 calculates a thermal expansion amount $\Delta U(n=1)$ of workpiece W in the Z-axis direction (S107). In this step, second workpiece spindle control unit 87 substitutes linear expansion coefficient $\alpha$ of workpiece W specified in the step of S103, temperature T(n=0) of workpiece W detected by temperature detection unit 94 in the step of S104, and temperature T(n=1) of workpiece W detected by temperature detection unit 94 in the step of S106, into the following equation, to calculate thermal expansion amount $\Delta U(n=1)$ of workpiece W in the Z-axis direction.

$$\Delta U(n) = \alpha * S * [T(n) - T(n-1)]$$

That is, workpiece W to which laser beam L is emitted expands by $\Delta U(n=1)$ in the Z-axis direction, during the lapse of the predetermined time from the start of the additive manufacturing.

Referring to Figs. 5, 7, and 8, then, second workpiece spindle control unit 87 controls second workpiece spindle feed motor 93 such that second workpiece spindle 117 moves in the +Z-axis direction by $\Delta U(n=1)$ calculated in the step of S107 (S108).

Then, after the step of S108 is completed and after a lapse of a predetermined time from the step of S106, the process returns to the step of S106. Temperature detection unit 94 and second workpiece spindle control unit 87 repeat the steps of S106, S107, and S108 while the additive manufacturing for workpiece W started in the step of S105 is performed. Each time the steps of S106, S107, and S108 are repeated, the value of n in the equation described above takes an integer value that sequentially increases from 1. As second workpiece spindle 117 moves in the +Z-axis direction, spindle-to-spindle distance H between first workpiece spindle 112 and second workpiece spindle 117 increases (H2>H1).

It should be noted that, although the calculation method described above is based on an assumption that temperature distribution of workpiece W is uniform in the Z-axis direction for ease of description, the temperature distribution of workpiece W in the Z-axis direction actually has a gradient in which a region to which laser beam L is emitted has the highest temperature and the temperature decreases with increase in distance from the region to which laser beam L is emitted. When thermal expansion amount $\Delta U(n)$ of workpiece W is determined while considering such a temperature distribution, thermal expansion amount ΔU(n) can be determined for example by dividing workpiece W into a plurality of regions arranged in the Z-axis direction, detecting a representative temperature of workpiece W in each region, calculating a thermal expansion amount of workpiece W in each region based on the detected representative temperature, and finally, adding all the thermal expansion amounts of the workpiece in the plurality of regions.

Referring to Figs. 6 to 8, then, tool spindle control unit 84, additive manufacturing control unit 85, and the like end the additive manufacturing for workpiece W. Temperature detection unit 94 detects a temperature T(m=0) of workpiece W at the end of the additive manufacturing (S109). Temperature detection unit 94 outputs detected temperature T(m=0) of workpiece W to second workpiece spindle control unit 87. Thereafter, workpiece W subjected to the additive manufacturing is left with being held by first workpiece spindle 112 and second workpiece spindle 117, to cool workpiece W.

Then, temperature detection unit 94 detects a temperature T(m=1) of workpiece W, after a lapse of a predetermined time from the end of the additive manufacturing in the step of S109 (S110). Temperature detection unit 94 outputs detected temperature T(m=1) of workpiece W to second workpiece spindle control unit 87.

Then, second workpiece spindle control unit 87 calculates a thermal contraction amount ΔV(m=1) of workpiece W in the Z-axis direction (S111). In this step, second workpiece spindle control unit 87 substitutes linear expansion coefficient α of workpiece W specified in the step of S103, temperature T(m=0) of workpiece W detected by temperature detection unit 94 in the step of S109, and temperature T(m=1) of workpiece W detected by temperature detection unit 94 in the step of S110, into the following equation, to calculate thermal contraction amount ΔV(m=1) of workpiece W in the Z-axis direction.

$$\Delta V(m) = \alpha * S * [T(m-1) - T(m)]$$

That is, workpiece W left in processing area 200 contracts by ΔV(m=1) in the Z-axis direction, during the predetermined time from the end of the additive manufacturing.

Then, second workpiece spindle control unit 87 controls second workpiece spindle feed motor 93 such that second workpiece spindle 117 moves in the -Z-axis direction by ΔV(m=1) calculated in the step of S111 (S112).

Then, after the step of S112 is completed and after a lapse of a predetermined time from the step of S110, the process returns to the step of S110. Temperature detection unit 94 and second workpiece spindle control unit 87 repeat the steps of 5110, S111, and S112 while cooling of workpiece W is performed. Each time the steps of S110, S111, and S112 are repeated, the value of m in the equation described above takes an integer value that sequentially increases from 1. As second workpiece spindle 117 moves in the -Z-axis direction, spindle-to-spindle distance H between first workpiece spindle 112 and second workpiece spindle 117 decreases (H3<H2).

It should be noted that the method for determining thermal contraction amount ΔV(m) of workpiece W while considering the temperature distribution of workpiece W in the Z-axis direction is the same as that in the case of determining thermal expansion amount ΔU(n) of workpiece W described above.

Then, when the cooling of workpiece W is completed, workpiece W is removed from first workpiece spindle 112 and second workpiece spindle 117 (S113). Through the steps described above, the method for processing the workpiece using processing machine 100 in Figs. 1 and 2 is completed.

According to such a configuration, an axis-to-axis distance between first holding portion 51 and second holding portion 52 that hold workpiece W can be adjusted freely, using first workpiece spindle 112 and second workpiece spindle 117 disposed to face each other in processing machine 100. Accordingly, the method for processing the workpiece in the present embodiment can be implemented with a simple configuration.

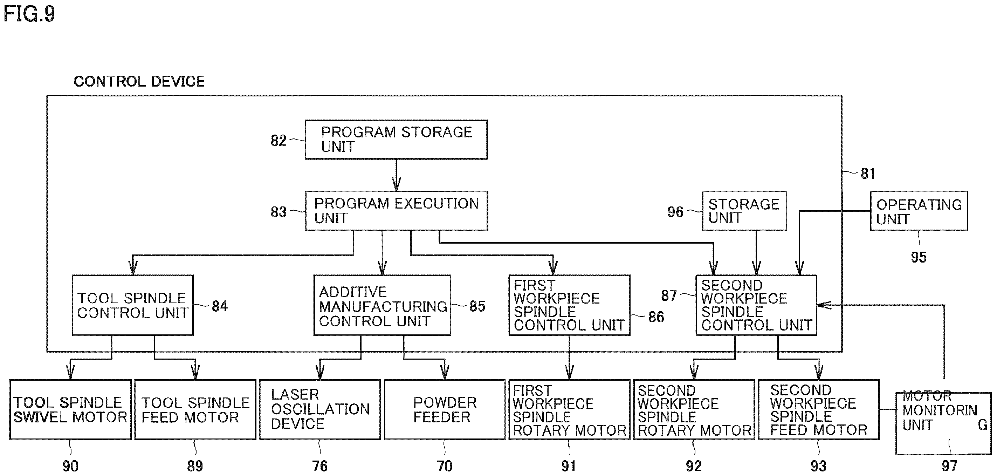

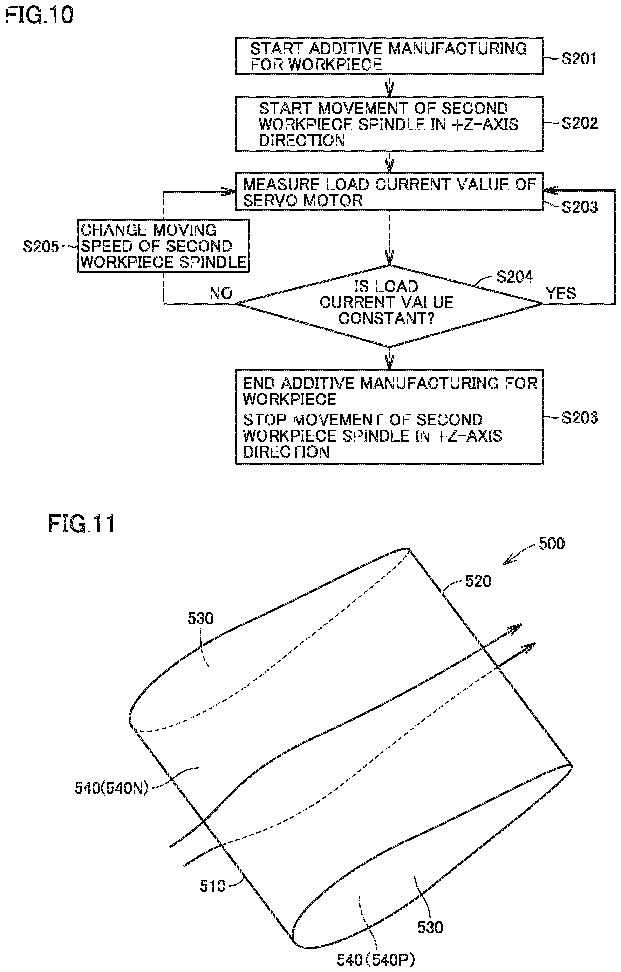

Fig. 9 is a block diagram showing a variation of the control system related to the additive manufacturing for the workpiece in Fig. 7. Fig. 10 is a flowchart diagram showing a variation of the flow of the steps of performing the method for processing the workpiece in Fig. 8.

Referring to Figs. 9 and 10, in the present variation, processing machine 100 does not have temperature detection unit 94 in Fig. 9. Processing machine 100 has a motor monitoring unit 97. Motor monitoring unit 97 monitors the state of second workpiece spindle feed motor 93. More specifically, motor monitoring unit 97 detects a motor current (load current value) of second workpiece spindle feed motor 93.

In the present variation, second workpiece spindle control unit 87 controls second workpiece spindle feed motor 93, based on the motor current of second workpiece spindle feed motor 93 detected by motor monitoring unit 97.

As a representative example, a control step during the additive manufacturing for workpiece W will be described. The additive manufacturing for workpiece W is started (S201). When the additive manufacturing is started in the step of S201, second workpiece spindle control unit 87 controls second workpiece spindle feed motor 93 such that second workpiece spindle 117 starts moving in the +Z-axis direction at a predetermined speed (S202).

Then, motor monitoring unit 97 detects the motor current of second workpiece spindle feed motor 93 (S203). Motor monitoring unit 97 outputs the detected motor current of second workpiece spindle feed motor 93 to second workpiece spindle control unit 87.

Then, second workpiece spindle control unit 87 determines whether or not the motor current value detected by motor monitoring unit 97 is constant (S204). When it is determined in the step of S204 that the motor current value detected by motor monitoring unit 97 is constant, the process returns to the step of S203.

When it is determined in the step of S204 that the motor current value detected by motor monitoring unit 97 is not constant, second workpiece spindle control unit 87 controls second workpiece spindle feed motor 93 such that the moving speed of second workpiece spindle 117 in the +Z-axis direction is changed (S205). Motor monitoring unit 97 and second workpiece spindle control unit 87 repeat the steps of S203 to S205 while the additive manufacturing for workpiece W started in the step of S201 is performed, to maintain the motor current of second workpiece spindle feed motor 93 to be constant. In this case, a load on second workpiece spindle feed motor 93 is constant, and thus second workpiece spindle 117 moves in the +Z-axis direction according to expansion of workpiece W in the Z-axis direction.

Finally, tool spindle control unit 84, additive manufacturing control unit 85, and the like end the additive manufacturing for workpiece W. Second workpiece spindle control unit 87 controls second workpiece spindle feed motor 93 such that movement of second workpiece spindle 117 in the +Z-axis direction is stopped.

Fig. 11 is a perspective view showing an example of the workpiece to be subjected to the additive manufacturing. Referring to Fig. 11, the method for processing the workpiece in the present embodiment can be applied to repair a turbine blade 500.

Turbine blade 500 has a leading edge 510, a trailing edge 520, a blade surface 540, and a pair of turbine side surfaces 530.

Leading edge 510 is a blade front end through which a fluid such as air flows in when turbine blade 500 rotates, and has an edge shape. Trailing edge 520 is a blade rear end through which the fluid flows out when turbine blade 500 rotates, and has an edge shape.

Blade surface 540 extends between leading edge 510 and trailing edge 520. Blade surface 540 extends in a curved shape between leading edge 510 and trailing edge 520. The fluid flowing in through leading edge 510 when turbine blade 500 rotates flows along blade surface 540 toward trailing edge 520. Blade surface 540 has a positive pressure surface 540P and a negative pressure surface 540N. A relatively large pressure acts on positive pressure surface 540P by the fluid flowing on blade surface 540, and a relatively small pressure acts on negative pressure surface 540N by the fluid flowing on blade surface 540.

The pair of turbine side surfaces 530 are disposed at both ends of blade surface 540, respectively. Each of turbine side surfaces 530 is a flat surface. Each of turbine side surfaces 530 is a flat surface orthogonal to an extending direction of leading edge 510 and trailing edge 520.

Turbine blade 500 is made of a metal material such as a nickel-based alloy or Ti-6Al-4V.

As the number of uses of turbine blade 500 increases, leading edge 510 or trailing edge 520 may be chipped, or blade surface 540 may have a relatively small crack or a relatively large depression. Turbine blade 500 having such a defect is repaired.

More specifically, in processing machine 100 shown in Figs. 1 and 2, turbine blade 500 is held by first workpiece spindle 112 and second workpiece spindle 117 such that leading edge 510, trailing edge 520, and blade surface 540 are disposed to be oriented outward in the radial direction of central axis 201, and turbine side surfaces 530 are disposed to be oriented in the axial direction of central axis 201.

Then, first workpiece spindle 112 and second workpiece spindle 117 are rotated about central axis 201, to dispose leading edge 510, trailing edge 520, or surface area 540, which is to be repaired, to face tool spindle 121. At a part to be repaired of turbine blade 500, tool spindle 121 removes a crack portion, or levels the part to have a surface shape suitable for the additive manufacturing.

Then, the additive manufacturing is performed on turbine blade 500. Additive manufacturing head 21 is attached to tool spindle 121, and the additive manufacturing is performed using the same material powder as the metal material constituting turbine blade 500, to overlay the material powder on the part to be repaired of turbine blade 500. On this occasion, the axis-to-axis distance between first workpiece spindle 112 and second workpiece spindle 117 during the additive manufacturing is controlled according to the flowchart in Fig. 8 or 10.

Then, cutting processing after the additive manufacturing is performed on turbine blade 500. Additive manufacturing head 21 is detached from tool spindle 121, and tool spindle 121 performs the cutting processing on the overlay applied to turbine blade 500, to finish the surface of turbine blade 500.

As another example, it is also possible to apply the method for processing the workpiece in the present embodiment to manufacture a die-cut roll used for processing a film, a nonwoven fabric, or the like.

Summarizing the configurations of the method for processing the workpiece and processing machine 100 in the embodiment of the present invention described above, the method for processing the workpiece in the present embodiment includes holding workpiece W by first holding portion 51 and second holding portion 52 that are disposed to be separated from each other, performing additive manufacturing on workpiece W by supplying material powder P and emitting laser beam L to workpiece W held by first holding portion 51 and second holding portion 52, and relatively moving first holding portion 51 and second holding portion 52 in a direction away from each other during at least a portion of performing the additive manufacturing on workpiece W.

Processing machine 100 in the present embodiment is a processing machine that performs additive manufacturing for a workpiece. The processing machine includes: additive manufacturing head 21 that supplies material powder P and emits laser beam L to workpiece W; first workpiece spindle 112 for rotating workpiece W about central axis 201 as a predetermined axis; second workpiece spindle 117 for rotating workpiece W about central axis 201 as the predetermined axis, second workpiece spindle 117 being disposed to face first workpiece spindle 112 in an axial direction of central axis 201, and being slidable in the axial direction of central axis 201; and control device 81 that controls processing machine 100. Control device 81 controls operation of additive manufacturing head 21 to perform the additive manufacturing on workpiece W by supplying material powder P and emitting laser beam L to workpiece W held by first workpiece spindle 112 and second workpiece spindle 117, and controls sliding operation of second workpiece spindle 117 such that second workpiece spindle 117 moves in a direction away from first workpiece spindle 112 during at least a portion during the additive manufacturing for workpiece W.

According to the method for processing the workpiece and processing machine 100 in the embodiment of the present invention configured as described above, the accuracy of processing the workpiece can be maintained to be high in the additive manufacturing for the workpiece using directed energy deposition.

It should be understood that the embodiment disclosed herein is illustrative and non-restrictive in every respect. The scope of the present invention is defined by the scope of the claims, rather than the description above, and is intended to include any modifications within the scope and meaning equivalent to the scope of the claims.

INDUSTRIAL APPLICABILITY

The present invention is applied to additive manufacturing for a workpiece using directed energy deposition.

REFERENCE SIGNS LIST

21: additive manufacturing head; 24: cable; 26: nozzle; 51: first holding portion; 52: second holding portion; 70: powder feeder; 71: mixer, 72: powder hopper; 76: laser oscillation device; 81: control device; 82: program storage unit; 83: program execution unit; 84: tool spindle control unit; 85: additive manufacturing control unit; 86: first workpiece spindle control unit; 87: second workpiece spindle control unit; 89: tool spindle feed motor; 90: tool spindle swivel motor; 91: first workpiece spindle rotary motor; 92: second workpiece spindle rotary motor; 93: second workpiece spindle feed motor; 94: temperature detection unit; 95: operating unit; 96: storage unit; 97: motor monitoring unit; 100: processing machine; 111: first headstock; 112: first workpiece spindle; 112f, 117f, 123: spindle end surface; 113, 118: chuck; 116: second headstock; 117: second workpiece spindle; 121: tool spindle; 131: tool rest; 132: swiveling portion;

136: bed; 200: processing area; 201, 201A, 201B, 203, 206: central axis; 204: swiveling central axis; 205: splash guard; 500: turbine blade; 510: leading edge; 520: trailing edge; 530: turbine side surface; 540: blade surface, 540N: negative pressure surface; 540P: positive pressure surface; H: spindle-to-spindle distance; L: laser beam; P: material powder; T: temperature; W: workpiece; fa: surface.

**Claims**

1. A method for processing a workpiece, the method comprising:

   holding the workpiece by a first holding portion and a second holding portion that are disposed to be separated from each other;
   performing additive manufacturing on the workpiece by supplying material powder and emitting a laser beam to the workpiece held by the first holding portion and the second holding portion; and
   relatively moving the first holding portion and the second holding portion in a direction away from each other during at least a portion of performing the additive manufacturing on the workpiece.

2. The method for processing the workpiece according to claim 1, wherein

   the first holding portion is a first workpiece spindle for rotating the workpiece about a predetermined axis,
   the second holding portion is a second workpiece spindle for rotating the workpiece about the predetermined axis, the second workpiece spindle being disposed to face the first workpiece spindle in an axial direction of the predetermined axis, and being slidable in the axial direction of the predetermined axis, and
   relatively moving the first holding portion and the second holding portion includes sliding the second workpiece spindle in the axial direction of the predetermined axis.

3. The method for processing the workpiece according to claim 1 or 2, further comprising:

   detecting a temperature of the workpiece during at least a portion of performing the additive manufacturing on the workpiece; and
   calculating a thermal expansion amount of the workpiece based on the detected temperature of the workpiece, wherein
   relatively moving the first holding portion and the second holding portion includes relatively moving the first holding portion and the second holding portion in the direction away from each other, by a distance corresponding to the calculated thermal expansion amount of the workpiece.

4. The method for processing the workpiece according to any one of claims 1 to 3, further comprising cooling the workpiece while relatively moving the first holding portion and the second holding portion in a direction closer to each other, after performing the additive manufacturing on the workpiece.

5. A processing machine that performs additive manufacturing for a workpiece, the processing machine comprising:

   an additive manufacturing head that supplies material powder and emits a laser beam to the workpiece;
   a first workpiece spindle for rotating the workpiece about a predetermined axis;
   a second workpiece spindle for rotating the workpiece about the predetermined axis, the second workpiece spindle being disposed to face the first workpiece spindle in an axial direction of the predetermined axis, and being slidable in the axial direction of the predetermined axis; and
   a control device that controls the processing machine, wherein
   the control device

      controls operation of the additive manufacturing head to perform the additive manufacturing on the workpiece by supplying the material powder and emitting the laser beam to the workpiece held by the first workpiece spindle and the second workpiece spindle, and
      controls sliding operation of the second workpiece spindle such that the second workpiece spindle moves in a direction away from the first workpiece spindle during at least a portion during the additive manufacturing for the workpiece.

FIG.1

EP 4 470 710 A1

FIG.2

## FIG.3

## FIG.4

FIG.5

FIG.6

FIG.7

CONTROL DEVICE

82 — PROGRAM STORAGE UNIT

83 — PROGRAM EXECUTION UNIT

96 — STORAGE UNIT

81

OPERATING UNIT

95

TOOL SPINDLE CONTROL UNIT — 84

ADDITIVE MANUFACTURING CONTROL UNIT — 85

FIRST WORKPIECE SPINDLE CONTROL UNIT — 86

87 — SECOND WORKPIECE SPINDLE CONTROL UNIT

TEMPERATURE DETECTION UNIT

94

TOOL SPINDLE SWIVEL MOTOR

TOOL SPINDLE FEED MOTOR

LASER OSCILLATION DEVICE

POWDER FEEDER

FIRST WORKPIECE SPINDLE ROTARY MOTOR

SECOND WORKPIECE SPINDLE ROTARY MOTOR

SECOND WORKPIECE SPINDLE FEED MOTOR

90        89        76        70        91        92        93

EP 4 470 710 A1

## FIG.8

```
HOLD WORKPIECE BY FIRST WORKPIECE
SPINDLE AND SECOND WORKPIECE          ─S101
SPINDLE
              │
              ▼
INPUT MATERIAL FOR WORKPIECE          ─S102
              │
              ▼
SPECIFY LINEAR EXPANSION              ─S103
COEFFICIENT OF WORKPIECE
              │
              ▼
DETECT TEMPERATURE T(n=0) OF          ─S104
WORKPIECE
              │
              ▼
START ADDITIVE MANUFACTURING FOR      ─S105
WORKPIECE
              │
              ▼
S106─  DETECT TEMPERATURE T(n=1, 2, ...) OF
       WORKPIECE
              │
              ▼
S107─  CALCULATE THERMAL EXPANSION
       AMOUNT ΔU(n=1, 2, ...) OF WORKPIECE
              │
              ▼
S108─  MOVE SECOND WORKPIECE SPINDLE IN
       +Z-AXIS DIRECTION BY ΔU(n=1 2, ...)
              │
              ▼
END ADDITIVE MANUFACTURING FOR
WORKPIECE                             ─S109
DETECT TEMPERATURE T(m=0) OF
WORKPIECE
              │
              ▼
DETECT TEMPERATURE T(m=1, 2, ...) OF  ─S110
WORKPIECE
              │
              ▼
CALCULATE THERMAL CONTRACTION         ─S111
AMOUNT ΔV(m=1, 2, ...) OF WORKPIECE
              │
              ▼
MOVE SECOND WORKPIECE SPINDLE IN      ─S112
-Z-AXIS DIRECTION BY ΔV(m=1, 2, ...)
              │
              ▼
REMOVE WORKPIECE                      ─S113
```

FIG.9

CONTROL DEVICE

- 82 — PROGRAM STORAGE UNIT
- 83 — PROGRAM EXECUTION UNIT
- 84 — TOOL SPINDLE CONTROL UNIT
- 85 — ADDITIVE MANUFACTURING CONTROL UNIT
- 86 — FIRST WORKPIECE SPINDLE CONTROL UNIT
- 87 — SECOND WORKPIECE SPINDLE CONTROL UNIT
- 96 — STORAGE UNIT
- 95 — OPERATING UNIT
- 81

- 90 — TOOL SPINDLE SWIVEL MOTOR
- 89 — TOOL SPINDLE FEED MOTOR
- 76 — LASER OSCILLATION DEVICE
- 70 — POWDER FEEDER
- 91 — FIRST WORKPIECE SPINDLE ROTARY MOTOR
- 92 — SECOND WORKPIECE SPINDLE ROTARY MOTOR
- 93 — SECOND WORKPIECE SPINDLE FEED MOTOR
- 97 — MOTOR MONITORING UNIT

EP 4 470 710 A1

FIG.10

START ADDITIVE MANUFACTURING FOR WORKPIECE — S201

START MOVEMENT OF SECOND WORKPIECE SPINDLE IN +Z-AXIS DIRECTION — S202

MEASURE LOAD CURRENT VALUE OF SERVO MOTOR — S203

CHANGE MOVING SPEED OF SECOND WORKPIECE SPINDLE — S205

IS LOAD CURRENT VALUE CONSTANT? — S204

NO

YES

END ADDITIVE MANUFACTURING FOR WORKPIECE
STOP MOVEMENT OF SECOND WORKPIECE SPINDLE IN +Z-AXIS DIRECTION — S206

FIG.11

500
520
530
540(540N)
510
530
540(540P)

## INTERNATIONAL SEARCH REPORT

| International application No. |
| --- |
| **PCT/JP2023/007068** |

**A. CLASSIFICATION OF SUBJECT MATTER**

*B23K 26/08*(2014.01)i; *B23K 26/03*(2006.01)i; *B23K 26/10*(2006.01)i; *B23K 26/342*(2014.01)i
FI: B23K26/342; B23K26/10; B23K26/03

According to International Patent Classification (IPC) or to both national classification and IPC

**B. FIELDS SEARCHED**

Minimum documentation searched (classification system followed by classification symbols)

B23K26/00-26/70; B29C64/00-64/40, 67/00-67/08, 67/24-69/02, 73/00-73/34; B29D1/00-29/10, 33/00, 99/00;
B33Y10/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2019-119162 A (RICOH CO., LTD.) 22 July 2019 (2019-07-22) entire text, all drawings | 1-5 |
| A | JP 2010-42524 A (PANASONIC ELECTRIC WORKS CO., LTD.) 25 February 2010 (2010-02-25) entire text, all drawings | 1-5 |
| A | JP 2021-59785 A (GENERAL ELECTRIC CO.) 15 April 2021 (2021-04-15) entire text, all drawings | 1-5 |
| A | WO 2020/111231 A1 (HITACHI METALS, LTD.) 04 June 2020 (2020-06-04) entire text, all drawings | 1-5 |

☐ Further documents are listed in the continuation of Box C.    ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **09 May 2023** | **16 May 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2023/007068**

| Patent document cited in search report | | | Publication date (day/month/year) | Patent family member(s) | | | Publication date (day/month/year) |
|---|---|---|---|---|---|---|---|
| JP | 2019-119162 | A | 22 July 2019 | (Family: none) | | | |
| JP | 2010-42524 | A | 25 February 2010 | US<br>entire text, all drawings<br>DE<br>CN | 2010/0034983<br><br>102009036648<br>101642809 | A1<br><br>A1<br>A | |
| JP | 2021-59785 | A | 15 April 2021 | US<br>entire text, all drawings<br>WO<br>CN | 2018/0111334<br><br>2018/080691<br>110087804 | A1<br><br>A1<br>A | |
| WO | 2020/111231 | A1 | 04 June 2020 | US<br>entire text, all drawings<br>EP<br>CN | 2021/0197281<br><br>3888819<br>112334253 | A1<br><br>A1<br>A | |

Form PCT/ISA/210 (patent family annex) (January 2015)

**EP 4 470 710 A1**

**Patent documents cited in the description**

- JP 6810823 B